Europäisches Patentamt

European Patent Office

Office européen des brevets

(19)

(11) Publication number: 0 122 884
A1

# EUROPEAN PATENT APPLICATION

(12)

(21) Application number: 84830026.5

(22) Date of filing: 08.02.84

(51) Int. Cl.³: B 29 D 23/12

(30) Priority: 17.03.83 IT 2010983

(43) Date of publication of application:
24.10.84 Bulletin 84/43

(84) Designated Contracting States:
AT BE CH DE FR GB LI LU NL SE

(71) Applicant: ISOLCELL EUROPA S.r.l.
Via A. Meucci Strada Zone Industriale
I-39055 Laives(IT)

(72) Inventor: Pruneri, Dario
Via Colonia, 1
Bolzano(IT)

(72) Inventor: Rossi, Giovanni A.
Via T. Levi - Civita, 3
I-40135 Bologna(IT)

(72) Inventor: Zanon, Karl
Via Sibilla, 11
I-39012 Merano(IT)

(74) Representative: Zini, Alessandro
Ufficio Tecnico Internazionale Brevetti Ing. Alessandro
Zini Piazza Castello 1
I-20121 Milano(IT)

(54) Machine for producing tubular manufactured articles of plastic reinforced by filaments.

(57) A machine for producing tubular manufactured articles of plastic reinforced by filaments comprises a mandrel (1) having a shape corresponding to that of the manufactured article to be produced and rotatable about its axis, a mobile unit (7) adapted to reciprocate parallel to the axis of the mandrel (1), and an electronic logic. The mobile unit (7) comprises a store (10) for the roving bobbins (8), a tank (11) containing the plastic in a fluid state in which the filaments are impregnated with plastic, and an annular roving distribution device (12). The electronic logic is adapted to synchronize the rotation of the mandrel (1) with the traverse of the mobile unit (7) to obtain a uniform winding of the filaments with a change of the shape of the mandrel (1) and, the mandrels (1) being equal, with the change of the cross-section along the mandrel (1).

FIG. 1

EP 0 122 884 A1

- 1 -

Machine for producing tubular manufactured articles
of plastic reinforced by filaments.

The present invention relates to a machine for pro
ducing tubular manufactured articles of plastic re
inforced by filaments.

There are well known machines for producing these types of tubular manufactured articles consisting of a plastic body, f.e. of thermoset resins, and a reinforcement adapted to be impregnated with a plastic in a fluid state, said reinforcement being formed f.e. by gla fibers. In the known machines a plurality of filaments, referred to in the art as rovings, impregnated with a resin, are wound according to predetermined angle and tension parameters, on a mandrel having a shape corresponding to that of the manufactured articles to be obtained. Once the winding is completed, the resin setting or catalyzing process is carried out the mandrel can be then withdrawn from the manufactured article or remain incorporated in the finished article, if requested.

It has been noticed that the manufactured articles produced by the known machines in the above describ ed manner have the disadvantage that they lack a good uniformity of their mechanical caracteristics and it has been found that this is mainly due to the fact that during the manufacturing of the manu factured article the known prior art machines are not in a position to assure a uniformity of the un winding speed of the filaments from the associated bobbins and a uniformity of the winding tension of said filaments on the mandrel. In addition, in the known machines it is difficult to effect the helical and axial winding of the filaments by means of a single distribution system of the filaments, whereby the manufacturing of these manufactured articles, which are normally formed by a combination of helical and axial windings, is rather time consuming and complex which influences the cost of said article.

It is the object of the present invention to provide a machine for producing this type of manufactured ar ticles in which the unwinding speed of the filaments from the associated bobbins is substantially uniform, the winding tension of the filaments on the mandrel is also substantially uniform and it is possible to effect both the helical winding and the axial winding of the filaments on the mand rel by means of a single distribution system of the filaments.

More particularly, the machine according to the invention for producing tubular manufactured articles of plastic material reinforced by filaments is characterized in that it comprises a mandrel having a shape corresponding to that of the inner profile of the manufactured article to be obtained, said mandrel being powered so as to cause it to rotate about its axis, at each end of the mandrel at least a set of radial points being provided which are equally spaced along the directrix of the mandrel; a powered mobile unit adapted to reciprocate parallel to the axis of the mandrel, and an electronic computer unit for controlling the various functions; the mobile unit comprising a store for the filament bobbins, a tank containing the plastic in a fluid state in which the filaments are impregnated with plastic and a device for distributing the filaments on the mandrel, said filament distribution device consisting of a set of ring pairs which are equal, parallel, spaced from one another, substantially concentric to the mandrel and disposed perpendicularly to the axis of the mandrel, the rings of each pair being connected to one another by spacing bars disposed substantially equally spaced along the length of the rings, a filament passing in the spaces formed by two adjacent spacing bars and two adjacent rings; the electronic control computer unit being adapted to synchronize the rotation of the mandrel with the traverse of the mobile unit to obtain a uniform winding of the filaments with the change of the shape of the mandrel and, the mandrels being equal, with the change of the cross-section along the mandrel.

According to a feature of the present invention, provided upstream of the plastic tank is a pair of rollers one of which is powered, between the rollers passing the filaments maintained separated from one another in a known manner, the electronic computer unit synchronizing the rotation of said pair of rollers with the rotation and traverse of the mobile unit.

According to a further feature of the present invention, provided downstream of the tank is a second pair of rollers between the rollers passing the filaments maintained separated from one another in a known manner. One of the rollers can be, if desired, powered, the electronic computer unit synchronizing the rotation of said pair of rollers with the rotation of the mandrel and the traverse of the mobile unit.

The invention will be better understood from the description, given merely as an example and therefore in no limiting sense, of an embodiment thereof, referring to the accompanying drawings in which:

Fig. 1 is a side view of the machine according to the invention;

Fig. 2 is an end view of a complex consisting of two machines like that of Fig. 1;

Fig. 3 is a partial enlarged side view of the tank and the filament distribution device;

Fig. 4 is a front view of the filament distribution device alone;

Fig. 5 is a vertical cross-section taken along the line 5-5 of Fig. 4 of a half of the device of Fig. 4;

Fig. 6 is a vertical longitudinal cross-section of the tank;

Fig. 7 is a view of the mandrel on which a second helical winding is about to be wound in a direction opposite to that of the first already wound helical winding;

Fig. 8 is a view of the mandrel on which a second axial winding is about to be wound on the first already wound axial winding;

Fig. 9 is a front diagrammatical view of the filament distribution device to which a pair of jaws has been added which are adapted to cause the filaments to adhere to the mandrel in the case of an axial winding; and

Fig. 10 is a side view thereof.

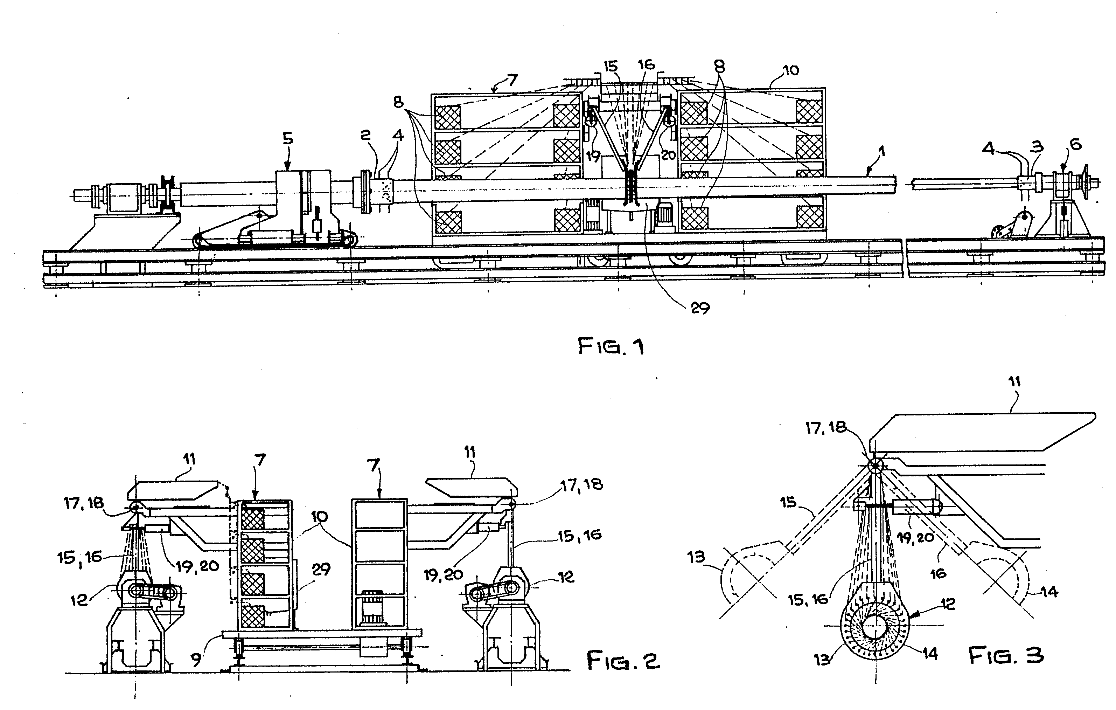

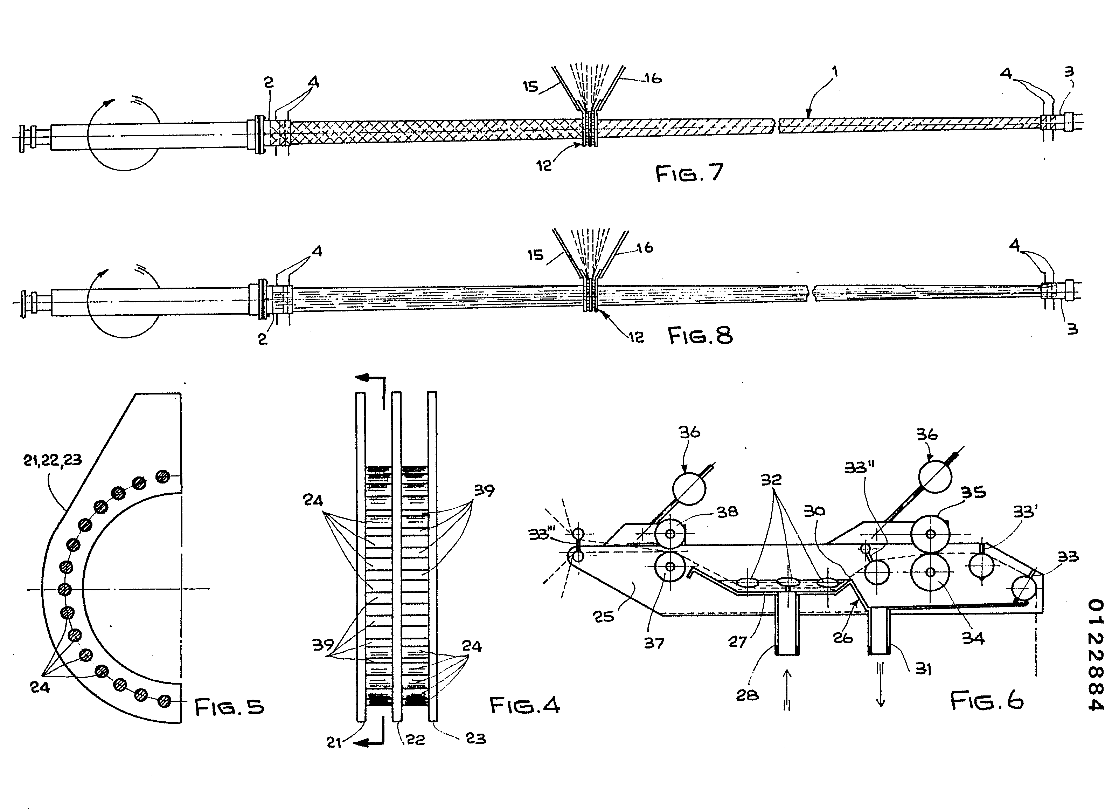

Referring to Fig. 1 which shows the machine according to the invention as a whole, it is seen that in the embodiment illustrated the mandrel 1 has a frusto-conical shape. The mandrel 1 can be seen more clearly, to an enlarged scale and separated from the remaining machine, in Figs. 7 and 8. As seen in these figures, the mandrel 1 has, at each of the sections 2,3 corresponding to the ends of the manufactured article to be obtained, two sets of radial equally spaced points 4. In the embodiment of Fig. 1 these sections 2 and 3 have a diameter greater than that of the adjacent portion of the mandrel.

The mandrel 1 is rotatably supported by the supports 5,6 and can be rotated in a manner not shown by a motor.

In Fig. 2 there is shown a complex formed by two machines in which the mobile units 7 of each machine are mounted specularly on a single powered carriage 9 which can reciprocate on rails parallel to the axis of the mandrel 1 so as to serve the two machines disposed at the two sides of said carriage 9. Each of the two mobile units 7 comprises a frame 10 supporting the roving bobbins 8. As is seen in Figs. 1 and 2, the bobbins 8 are disposed symmetrically with respect to an axial vertical plane of the frame 10. Disposed coaxially with said vertical plane and carried by a cantilevered support secured to the frame 10 are a tank 11 containing the plastic in a fluid state serving to impregnate the rovings and an annular device 12 for distributing the rovings, said annular device 12 consisting of two semiannular symmetrical parts 13,14 each secured to an arm 15,16 respectively rotatable about a fulcrum 17,18 respectively. The arms 15,16 are controlled hydraulically by means of the actuators 19,20 respectively. One (13) of the two semiannular parts forming the annular device 12 is shown enlarged in Figs. 4 and 5. It is seen in these Figs. that said semiannular part 13 consists of three half rings 21,22, 23 parallel to one another and connected by a plurality of spacing bars 24 which in the embodiment illustrated have a circular cross-section.

The tank 11 is illustrated more in detail in Fig.6 in which is seen that said tank 11 is formed by two side walls 25 and a bottom 26 shaped so as to form in one portion thereof a basin 27 for the resin intended to impregnate the rovings, the basin 27 being supplied with resin through the conduit 28 connected to a resin reservoir 29 it too carried by the carriage 9. An overflow device 30 keeps the resin at a constant level in the basin 27, the part in excess being brought back through the conduit 31 in the reservoir 29. The basin 27 contains three cross bars 32 having a substantially elliptical cross-section which are immersed in the resin

Supported by the walls 25 of the tank 11 are a set of combs 33,33',33",33"' whose purpose is to maintain the rovings spaced from one another.

A pair of rollers 34,35 is also rotatably supported by the walls 25 upstream the basin 27, the lower roller 34 being powered and the upper roller 35 being capable of being pressed against the lower roller 34 due to an adjustable balance weight 36.

A second pair of rollers 37,38 is also rotatably supported by the wall 25 downstream the basin 27, the lower roller 37 being powered and the upper roller 38 being capable of being pressed against the lower roller 37 due to an adjustable balance device 38 similar to the balance device 36.

A control microprocessor (not shown) can be disposed either on the carriage 9 or also on the ground and its function is to synchronize the traverse of the mobile unit 7 with the rotation of the mandrel 1 and the rotation of the rollers 34 and 37 in dependance on the shape of the mandrel 1 so as to obtain a substantially uniform winding of the rovings on the mandrel 1 even if the cross-section of the mandrel changes and to have also a substantially uniform unwinding speed of the rovings from the bobbins 8.

It will be described now briefly the operation of the machine assuming that the annular device 12 of the mobile unit 7 is at one end of the mandrel, f. e. at 2.

Once the roving bobbins 8 have been placed in their predetermined position in the support frame 10 the ends of the rovings are passed between the combs 33 and 33' provided in the tank 11, between the rollers 34,35, through the comb 33" and alternatively above and beneath the elliptical bars 32 (as is seen in Fig. 6), between the rollers 37,38 and through the comb 33"'. Each end of the rovings is then passed in one of the spaces 39 between the spacing bars 24 of the annular device 12. In order to avoid a sliding friction between adjacent rovings it is suitable to pass the rovings in every second space 39 between two spacing bars by using in the pair of rings 21-22 spaces staggered by the length of a space with respect to the spaces of the pair of rings 22,23. All roving ends are finally secured to a hook (not shown) or other similar device provided in each of the sections 2,3 of the mandrel 1.

Once the basin 27 is full of resin the machine is ready to produce the manufactured article.

It will be described now how the winding of the rovings on the mandrel is carried out so as to obtain the desired manufactured article distinguishing the case of the helical winding from that of the axial winding.

In order to obtain the helical winding the mandrel 1 is rotated slowly with a simultaneous slow advancement of the mobile unit 7 so that the rovings are put in tension between the two sets of points 4 of the end 2 and distribute themselves uniformly along the circumference of the mandrel. The mandrel 1 is then rotated and the mobile unit 7 advanced rapidly until the first set of points 4 at the other end 3 of the mandrel 1 is reached. It follows a new slow rotation of the mandrel with a simultaneous slow advancement of the mobile unit 7 until the second set of points is passed.

If it is desired to carry out a second helical winding crossed with respect to the preceding winding, it is sufficient to effect a new slow rotation of the mandrel 1 with a simultaneous slow return of the mobile unit 7 until the two sets of points 4 of the end 3 are passed and then to effect a new fast rotation of the mandrel 1 with a simultaneous fast return of the mobile unit 7 until the two sets of points 4 of the starting end are reached and to conclude with a slow rotation of the mandrel with a simultaneous slow return of the mobile unit 7 until the two sets of points 4 are passed.

If it is desired to carry out an axial winding, the start is like that of the preceding case with the difference that once the points 4 of the end 3 are passed, the rotation of the mandrel 1 is stopped and only a fast advancement of the mobile unit 7 is carried out until the first set of points 4 of the other end 3 is reached, whereupon the operation goes on as in the preceding case. Since, however, in the illustrated embodiment the ends 2 and 3 have a larger diameter than that of the adjacent portion of the mandrel 1 proper, when the annular device 12 is just before said sections 2 and 3 an annular jaw device is provided which clasps the whole set of rovings causing them to adhere to the mandrel.

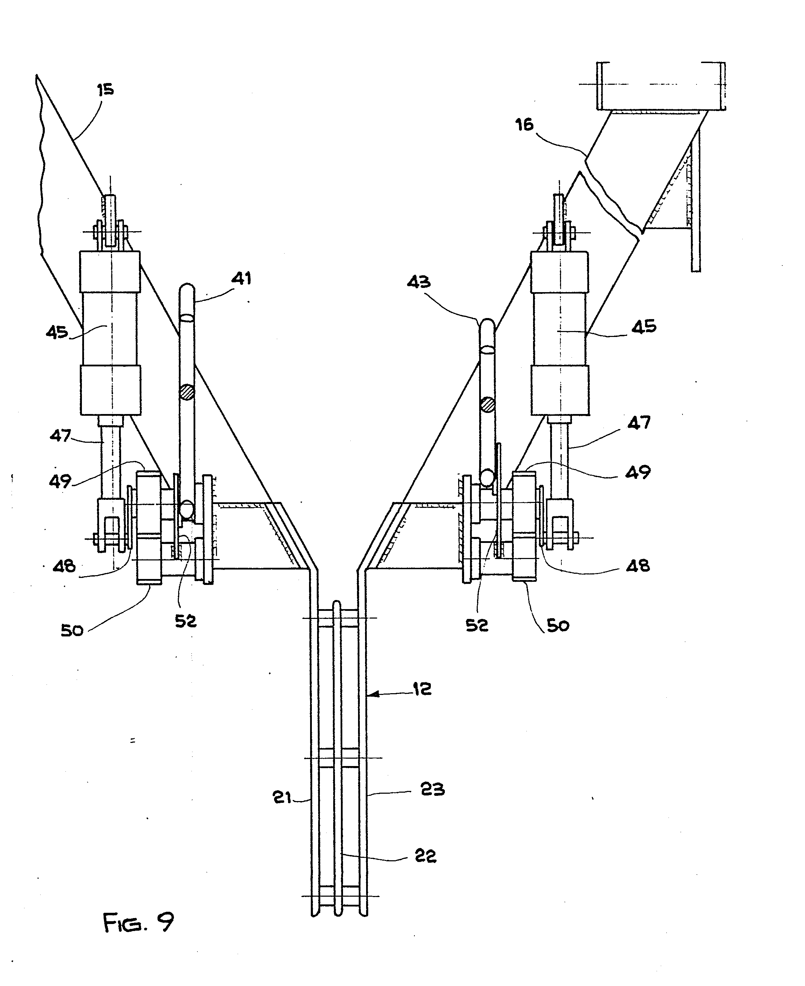

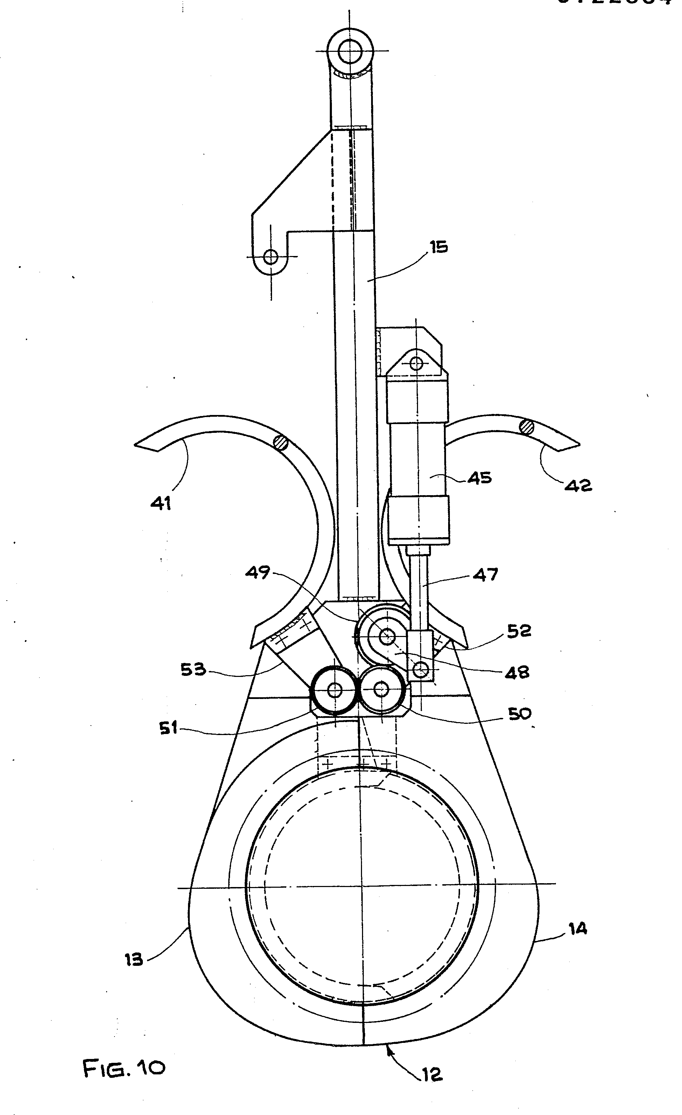

Said jaw device is shown in Figs. 9 and 10. In these Figs. is seen that provided on each side of the annular device 12 is a pair of jaws 41,42 and 43,44 respectively. The opening and the closure of the two pairs of jaws is controlled by a power cylinder 45 whose rod 47 is pivotally connected at one end thereof to the end of a crankshaft 48 secured to the shaft of a gear wheel meshing with a second gear wheel 50 on whose shaft one of the two jaws of the pair is secured by means of an arm 52. The gear wheel meshes in turn with another identical gear wheel 51 to whose shaft the other jaw of the pair is secured by means of an arm 53.

When the annular roving distribution device 12 reaches one of the ends of the mandrel 1 the electronic computer unit actuates the two power cylinders 45 whereby the two pairs of jaws 41, 42 and 43,44 respectively close and push the whole set of rovings in contact with the mandrel 1. Once the end winding is completed the jaws open again.

This jaw device is required, always in the case of an axial winding, even when the ends 2,3 have the same diameter as the adjacent portion of the mandrel 1, if said mandrel 1 (as in the case shown in the Figs.) has no constant cross-section and this with the purpose of causing the .. rovings to adhere to the mandrel, which would otherwise not occur.

If it is desired to carry out a subsequent return axial winding the just described operations are repeated in the reverse direction.

Actually, in most cases the manufactured articles produced by the machine will be obtained as combinations of helical and axial windings because in this manner a better mechanical strength of the manufactured article is obtained.

Once the set of windings is completed the resin is hardened in a known manner by means, if f. e. it is a thermoset resin, of heating (the mandrel can contain f.e. an electric resistance). Thereafter the manufactured article is withdrawn, also in a known manner, from the mandrel 1.

While but one embodiment of the invention has been illustrated and described, it is obvious that a number of modifications and changes can be made without departing from the scope of the invention.

Claims

1. Machine for producing tubular manufactured artic les of plastic reinforced by filaments, characterized in that it comprises a mandrel having a shape corresponding to that of the inner profile of the manufactured article to be obtained, said mandrel being powered so as to cause it to rotate about its axis, at each end of the mandrel at least a set of radial points being provided which are equally spaced along the diretrix of the mandrel; a powered mobile unit adapted to reciprocate parallel to the axis of the mandrel, and an electronic computer unit for controlling the various functions; the mobile unit comprising a store for the filament bobbins, a tank containing the plastic in a fluid state in which the filaments are impregnated with plastic, and a device for distributing the filaments on the mandrel, said filament distribution device consisting of  a set of ring pairs which are equal, parallel, spaced from one another, substantially concentric to the mandrel and disposed perpendicularly to the axis of the mandrel, the rings of each pair being connected to one another by spacing bars disposed substantially equally spaced along the length of the rings, a filament passing in the spaces formed by  two adjacent spacing bars and two adjacent  rings, the electronic control computer unit being adapted to synchronize the rotation of the mandrel with the traverse of the mobile unit to obtain a uniform winding of the filaments with the change of the shape of the mandrel and, the mandrel being equal, with the change of the cross-section along the mandrel.

2.Machine as claimed in claim 1, characterized in that the filaments are passed in every second space between adjacent spacing bars, the spaces used in one pair of rings being staggered by one space with respect to the spaces used in the adjacent pair of rings.

3. Machine as claimed in claims 1 or 2, characterized in that there are two pairs of rings and they have a common ring.

4. Machine as claimed in claim 1, characterized in that there is provided upstream the tank of plastic a pair of rollers, one of which is powered, between the rollers passing the filaments maintained separated from one another in a known manner, the electronic computer unit synchronizing the rotation of said pair of rollers with the rotation of the mandrel and the traverse of the mobile unit.

5. Machine as claimed in claim 1, characterized in that there is provided downstream the tank of plastic a pair of rollers, between the rollers passing the filaments maintained separated from one another in a known manner.

6. Machine as claimed in claim 5, characterized in that one of the rollers of the pair is powered, the electronic computer control unit synchronizing the rotation of said pair of rollers with the rotation of the mandrel and the traverse of the mobile unit.

7. Machine as claimed in any of the preceding claims, characterized in that the tank of plastic material contains bars crossing the filaments which have an elliptical cross-section and are immersed in the plastic contained in the tank, the filaments passing alternatively above and beneath said bars.

8. Machine as claimed in claims 4 and/or 5, charac terized in that connected to one of the rollers of the pair is a weight adjustable in position so as to change the pressure between the rollers of the pair.

9. Machine as claimed in one or more preceding claims, characterized in that the filament distribution annular device consists of two half ring assemblies which can be opened.

10. Machine as claimed in claim 1, characterized in that the filaments distribution device is equipped with a normally open jaw device controlled by an electronic computer unit, which intervenes on the basis of the program to close the jaws and cause the filaments to adhere to the mandrel according to the predetermined tensions.

FIG. 1

FIG. 2

FIG. 3

0122884

FIG. 7

FIG. 8

FIG. 5

FIG. 4

FIG. 6

0122884

0122884

FIG. 9

0122884

FIG. 10

## DOCUMENTS CONSIDERED TO BE RELEVANT

EP 84830026.5

| Category | Citation of document with indication, where appropriate, of relevant passages | Relevant to claim | CLASSIFICATION OF THE APPLICATION (Int. Cl. ³) |
|---|---|---|---|
| X | US - A - 4 089 727 (MC LAIN)<br>* Totality *<br>-- | 1,3 | B 29 D 23/12 |
| A | US - A - 4 251 036 (MC LAIN)<br>* Totality *<br>-- | 1 | |
| A | US - A - 3 281 299 (SHOBERT)<br>* Totality *<br>-- | 1,7 | |
| A | US - A - 4 081 303 (ROGERS)<br>* Totality *<br>--. | 1,4,5 | |
| A | US - A - 4 273 601 (WEINGART)<br>* Totality *<br>-- | | **TECHNICAL FIELDS SEARCHED (Int. Cl. ³)** |
| A | US - A - 3 492 187 (HIRTZER)<br>* Totality *<br>---- | | B 29 D<br>B 29 G<br>B 29 H |

The present search report has been drawn up for all claims

| Place of search | Date of completion of the search | Examiner |
|---|---|---|
| VIENNA | 18-06-1984 | MAYER |